# EUROPEAN PATENT APPLICATION

(11) **EP 1 489 828 A1**
(43) Date of publication of application: **22.12.2004**
(21) Application number: 04253511.2
(22) Date of filing: 11.06.2004
(51) Int. Cl.: H04N 1/21

(54) **Image processing apparatus and image capturing apparatus**

(30) Priority: 17.06.2003 JP 2003171865
(71) Applicant: Konica Minolta Opto, Inc., Hachioji-shi, Tokyo 192-8505 (JP)
(72) Inventor: Rokutanda, Etsuko, Hachioji-shi, Tokyo 192-8505 (JP)
(74) Representative: Nicholls, Michael John

(57) **Abstract**

An image processing apparatus for storing a picked up image as an image file and transferring the image file to an external device. The image processing apparatus has a determining section for determining a transfer compression parameter based on a data size of the image file and a data size that the external device is capable of accepting, by utilizing a prescribed parameter table, and a compression section for conducting a compression processing of the image file based on the transfer compression parameter determined by the determining section and creating a compressed image file for transfer.

## Description

### BACKGROUND OF THE INVENTION

This invention pertains to an image processing apparatus for transferring an image file obtained by image pickup to an external device, and to the image capturing device that includes the image processing apparatus.

In the past, digital cameras and the like have been known as image capturing devices that include this type of image processing apparatus (See Patent Document 1 for example). This type of image processing apparatus is generally one in which the picked up image is stored as an image file, and this image file is transferred to an external device such as a mobile-phone unit.

When the image file is being transferred to the external device, the image processing apparatus compares the data size of the image file with the buffer capacity of the external device, and if the buffer capacity is larger than the data size, the image file is transferred to the external device without being processed. If the buffer capacity is smaller than the data size of the image file for transfer, an image file for transfer is created in which the data size is compressed at a prescribed compression ratio.

In addition, the data size of the compressed image file is compared with the buffer capacity, and if buffer capacity is larger than the data size of the image file for transfer, the image file is transferred to the external device. If the image file is smaller than the buffer capacity, the image file is compressed again at a prescribed compression ratio. This process is repeated until the data size becomes smaller than buffer capacity, and then the image file is transferred to the external device.

### [Document 1]

### Official Gazette of Japanese Patent Tokkai 2003-60952

It is to be noted that depending on the image, a JPEG compressed image file may have some variation in the data size of the image file created. Thus, in the aforementioned image processing apparatus, when the image file for JPEG compression is handled, because the image file is compressed at a prescribed compression ratio, the data size may become much smaller than the buffer capacity of the external device and thus the image quality deteriorates more than necessary. Also, on the other hand, it is sometimes necessary to do the compression process a number of times until the data size becomes smaller than the buffer capacity of the external device, and thus a long time is required for the transfer process.

In view of the situation described above, the object of this invention is to provide an image processing apparatus in which the reduction in image quality when the image file is transferred to the external device is controlled and the transfer process can be done in a short time, as well as an image capturing apparatus that includes this image processing apparatus.

### SUMMARY OF THE INVENTION

The configurations for achieving the aforementioned object are as follows.
(1) An image processing apparatus which stores a picked up image as an image file and transfers the image file to an external device, wherein the image processing apparatus comprises:
   a parameter determining section which determines the transfer compression parameter based on the data size of the image file and the data size that the external device is capable of accepting; and;
      a transfer compression section which subjects the image file to compression processing based on the transfer compression parameter determined by the parameter determining section and creates a compressed image file for transfer.

   In (1), because the image file is compressed for transfer so as to correspond with the data size that the external device is capable of accepting, the data size of the compressed image file to be transferred to the external device can be close to the transferable data size. That is to say, the image can be transferred to the external device with the deterioration in image quality due to compression for transfer at the time of transfer being controlled to the greatest extent possible.
   In addition, because the image file corresponds with the data size that the external device is capable of accepting, compression of the image file is done only once. That is to say, when the image file is transferred to the external device, the transfer process can be carried out in a short time.
(2) The image processing device described in (1), wherein the image file is created by compression based on a storage compression parameter,
   and the parameter determining section determines the transfer compression parameter based on the storage compression parameter.
   In (2), in addition to the effects of Claim 1, because the transfer compression parameter is determined based on the storage compression parameter, the compressed image file can be created using a suitable parameter that takes into account the compression state of the image file.
(3) The image processing device described in (2), wherein the transfer compression section subjects the image file to compression processing based on a table obtained by using the transfer compression parameter in a prescribed quantization table.
   In (3), in addition to the effects of (2), because transfer compression parameter is used in the prescribed quantization table, compression for transfer can be carried out with a quantization table that has been pre-stored in the apparatus for example, and this is extremely advantageous for practical use.
(4) The image processing device described in any one of (1) to (3), wherein the parameter determining section determines the transfer compression parameter based on the data size of the image file.
   In (4), in addition to the effects of any one of (1) to (3), because the transfer compression parameter at the time of compression for transfer is determined based on the data size of the image file, the compressed image file is created using a suitable parameter which takes into account data size.
(5) The image processing device described in any one of (1) to (4), wherein the transfer compression section carries out the compression processing by changing the number of pixels of the image data.
   In (5), in addition to the effects of any one of (1) to (4), because the image file can be compressed by changing the number of pixels of the image data, the compression process is simple and easy, and reduction of image quality is the minimum necessary.
(6) An image capturing apparatus comprising:
   any one of the image processing apparatuses described in (1) to (5); and
   a resolution setting section that is capable of setting the resolution of the image file, and
   the parameter determining section of the image processing apparatus determines transfer compression parameter based on the resolution of the image file.

   In (6), because the transfer compression parameter is determined based on the resolution of the image file, the compressed image file is created using a suitable parameter which takes into account the resolution that is set by the resolution setting section.
(7) An image capturing apparatus comprising:
   an image processing apparatus described in any one of (1) to (5); and
   a compression ratio setting section that is capable of setting the compression ratio of the image file, wherein
   the parameter determining section of the image processing apparatus determines the transfer compression parameter based on the compression ratio of the image file.

   In (7), because the transfer compression parameter is determined based on the compression ratio of the image file, the compressed image file is created using a suitable parameter which takes into account the compression ratio that is set by the compression ratio setting section.

### BRIEF DESCRIPTION OF THE DRAWINGS

Fig. 1 is a block diagram of the schematic structure of the digital camera showing the first embodiment of this invention.
Fig. 2 is a block diagram showing the memory of the image processing apparatus of the digital camera.
Fig. 3 is an explanatory diagram showing the data size of the image file of the image processing apparatus.
Fig. 4 is an explanatory diagram showing the data size of the compressed image file that the mobile-phone unit is capable of accepting.
Fig. 5 is an explanatory diagram showing a parameter table of the transfer compression parameters.
Fig. 6 is an explanatory diagram showing the data size of the image file, as well as the data size after compression for transfer.
Fig. 7 is a block diagram showing the memory of the image processing apparatus of the digital camera showing the second embodiment of this invention.
Fig. 8 is an explanatory diagram showing storage compression parameters and transfer compression parameters of the image file.
Fig. 9 is an explanatory diagram showing an example of image file structure.

### DETAILED DESCRIPTION OF THE PREFERRED EMBODIMENTS

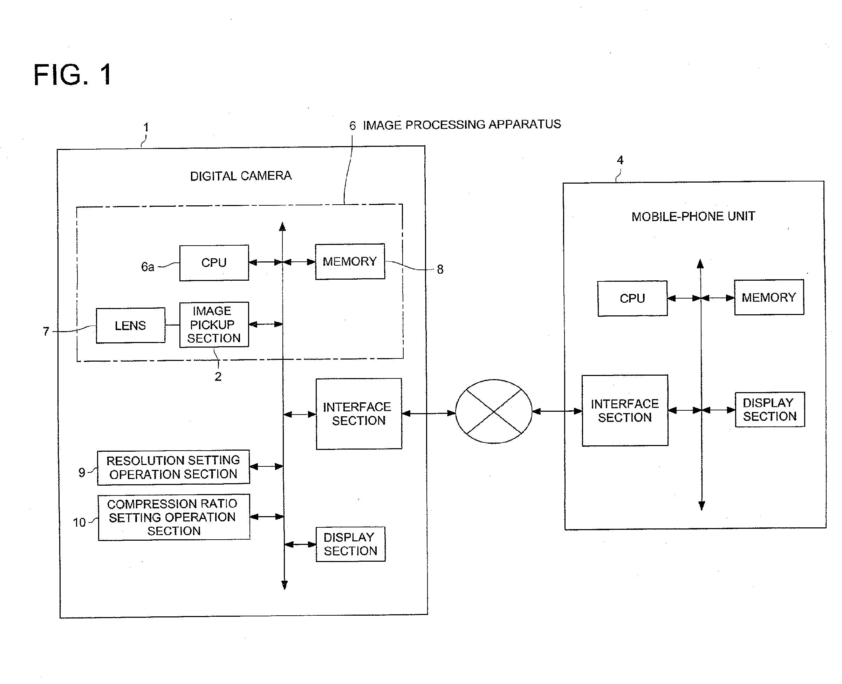

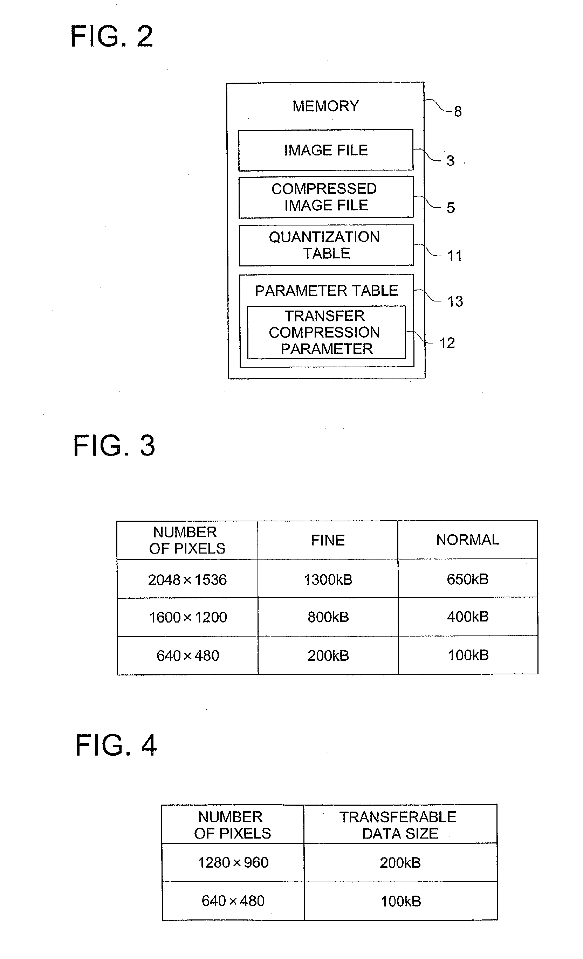

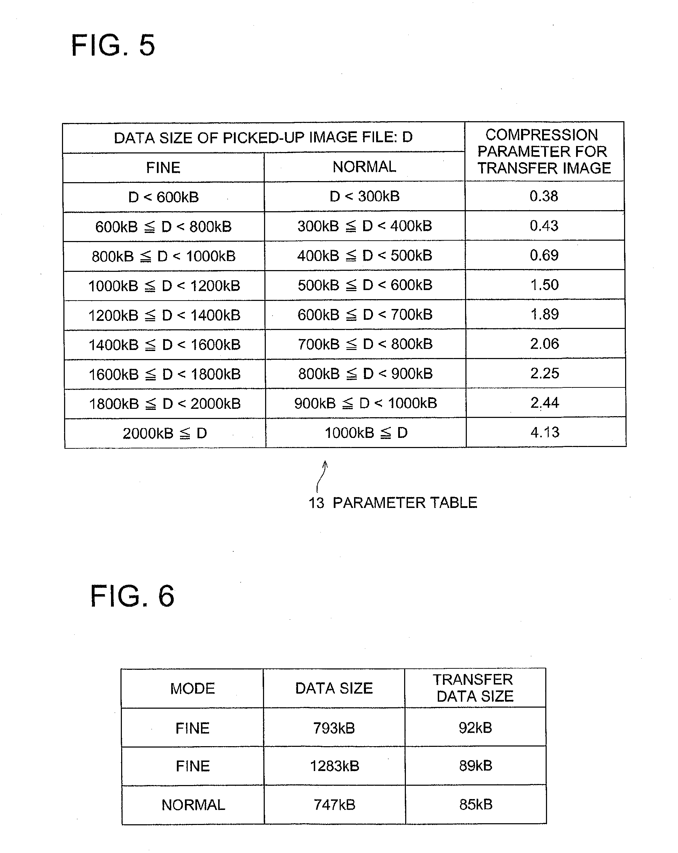

Figs. 1-6 show the first embodiment of this invention, and Fig. 1 is a block diagram of the schematic structure of the digital camera; Fig. 2 is a block diagram showing the memory of the image processing apparatus of the digital camera; Fig. 3 is an explanatory diagram of the data size of the image file of the image processing apparatus; Fig. 4 is an explanatory diagram of the data size of the compressed image file that the mobile-phone unit is capable of accepting; Fig. 5 is an explanatory diagram showing a parameter table of the transfer compression parameters; and Fig. 6 is an explanatory diagram showing the data size of the image file, as well as the data size after compression for transfer.

As shown in Fig. 1, the example of the image capturing device of this embodiment is digital camera 1. The image obtained at image pickup section 2 is processed to create the image file 3. The image file is then sent to an external device. As shown in Fig. 1, in the digital camera 1 of this embodiment, when the digital camera 1 is connected so as to communicate with the mobile-phone unit 4 which is the external device, compressed image file 5 is transferred to the mobile-phone unit 4. That is to say, the digital camera 1 comprises an image processing apparatus 6 which creates and stores the image file 3, and creates and transfers the compressed image file 5.

The image processing apparatus 6 comprises a CPU 6a or the like, and 3 resolution levels and 2 compression ratio levels are selected for the image that is obtained at the image pickup section 2 through the lens 7, and the image is stored in memory as image file 3. In this embodiment, CPU 6a, the memory 8 and the like comprise a transfer compression section which compresses image file 3 based on the transfer compression parameter 12 which will be described hereinafter, and creates a compressed image file 5 for transfer. Also, in this embodiment, the digital camera 1 comprises a resolution setting operation section 9 and a compression setting operation section 10 which are operated by a user. In addition, in this embodiment, the obtained image is compressed by variable length compression, and thus depending on the image, the data size of the image file 3 may be changed.

The resolution setting operation section 9 which is the resolution setting section has 3 resolution levels and to be specific, in terms of the number of pixels, the 3 selectable resolutions are: a resolution of (2048 x 1536), a resolution of (1600 x 1200), and a resolution of (640 x 480). In this embodiment the compression processing being used is JPEG compression which is known hitherto. The compression setting operation section 10 which is the compression ratio setting section, has 2 compression ratio levels and the selectable compression ratio levels are fine mode compression ratio and normal mode compression ratio. The size of the image file 3 will be larger in the fine mode than in the normal mode, but the setting is such that the image quality will not be reduced. When the obtained image is being compressed, a quantization table 11 that was pre-stored in the digital camera 1 is used. In this embodiment, processing such as image compression is done based on the quantization table 11 which is the reference. Fig. 3 shows the average data size of the image file 3 for the number of pixels and the compression ratios.

As shown in Fig. 3, the data size of the image file 3 is an average of about 1300 kB in the fine mode and 650 kB in the normal mode when the number of pixels is (2048 x 1536); an average of about 800 kB in the fine mode and 400 kB in the normal mode when the number of pixels is (1600 x 1200); and an average of about 200 kB in the fine mode and 100 kB in the normal mode when the number of pixels is (640 x 480).

In this embodiment, the image file 3 is expanded, resized to an image size for transfer, and then compressed again to thereby create the compressed image file 5. As shown in Fig. 4, when the image is transferred to the mobile-phone unit 4, the image size of the transfer image in terms of the number of pixels is limited to (1280 x 960) and (640 x 480). The upper limit of the data size of the transfer image is 200 kB when the number of pixels is (1280 x 960), and 100 kB when the number of pixels is (640 x 480). That is to say, the compressed image file 5 corresponds with the number of pixels at the mobile-phone unit 4 side, and must be created so that the upper limit of the data size that the mobile-phone unit 4 is capable of accepting is not exceeded.

The image file 3 is created by JPEG compression as described above, and this is done by compression based on a storage compression parameter corresponding to the compression ratios. In this embodiment, when the image file 3 which has been expanded is compressed for transfer, the compression is done based on a table obtained by using a transfer compression parameter 12 in the quantization table 11. As shown in Fig. 2, the parameter table 13 in which the transfer compression parameters 12 are uniquely set by the compression mode (compression ratio) and data size of the image file 3 and the number of pixels (resolution) of the files 3 and 5, is stored in the memory 8 of digital camera 1. That is to say, the CPU 6a and the memory 8 comprise a parameter determining section which determines the transfer compression parameter 12, based on the data size of the image file 3 and the data size that the mobile-phone unit 4 is capable of accepting. Fig. 5 shows the parameter table 13 used for creating a compressed image file 5 in which the number of pixels is (640 x 480) from the image file 3 in which the number of pixels is (2048 x 1536).

As shown in Fig. 5, when the data size of the image file 3 in fine mode is less than 600 kB, or when the data size is less than 300 kB in normal mode, the transfer compression parameter 12 is 0.38. When the data size in fine mode is 600 kB or greater, but less than 800 kB, or when the data size in normal mode is 300 kB or greater, but less than 400 kB, the transfer compression parameter 12 is 0.43. When the data size in fine mode is 800 kB or greater, but less than 1000 kB, or when the data size in normal mode is 400 kB or greater, but less than 500 kB, the transfer compression parameter 12 is 0.69. When the data size in fine mode is 1000 kB or greater, but less than 1200 kB, or when the data size in normal mode is 500 kB or greater, but less than 600 kB, the transfer compression parameter 12 is 1.50. When the data size in fine mode is 1200 kB or greater, but less than 1400 kB, or when the data size in normal mode is 600 kB or greater, but less than 700 kB, the transfer compression parameter 12 is 1.89. When the data size in fine mode is 1400 kB or greater, but less than 1600 kB, or when the data size in normal mode is 700 kB or greater, but less than 800 kB, the transfer compression parameter 12 is 2.06. When the data size in fine mode is 1600 kB or greater, but less than 1800 kB, or when the data size in normal mode is 800 kB or greater, but less than 900 kB, the transfer compression parameter 12 is 2.25. When the data size in fine mode is 1800 kB or greater, but less than 2000 kB, or when the data size in normal mode is 900 kB or greater, but less than 1000 kB, the transfer compression parameter 12 is 2.44. When the data size in fine mode is 2000 kB or greater, or when the data size in normal mode is 1000 kB or greater, the transfer compression parameter 12 is 4.13.

In the quantization table 11, the compression ratio increases as the values in each element of the table matrix increases, and the compression ratio decreases as these values decrease. That is to say, in parameter table 13, the larger the data size, the larger the compression ratio will be, and the smaller the data size, the smaller the compression ratio will be.

Fig. 6 shows an example of the results of creating a compressed image file 5 for transfer using the table obtained by using the transfer compression parameters 12 which are determined from the parameter table 13, in the quantization table 11. As shown in Fig. 6, if the 793 kB image file 3 in fine mode is expanded as described before and compressed for transfer, a compressed image file 5 with a data size of 92 kB is created. If the 1283 kB image file 3 in fine mode is expanded as described before and compressed for transfer, a compressed image file 5 with a data size of 89 kB is created. If the 747 kB image file 3 in normal mode is expanded as described before and compressed for transfer, a compressed image file 5 with a data size of 85 kB is created. In all cases, the data size is less than 100 kB which is the upper limit of the data size for the mobile-phone unit 4. In addition, the compressed image file 5 is never compressed more than necessary, and thus a specified image quality can be ensured.

In this manner, in the image processing apparatus 6 of this embodiment, the image file 3 is compressed for transfer so as to correspond with the data size that the mobile-phone unit 4 is capable of accepting, and thus the data size of the compressed image file 5 which is transferred to the mobile-phone unit 4 can be set to be close to the transferable data size. That is to say, an image can be sent to the mobile-phone unit 4 in such a way that deterioration in quality due to compression for transfer which is done at the time of transfer is significantly controlled.

In addition, by causing the image file 3 to correspond with the data size that the mobile-phone unit 4 is capable of accepting, the operation of compressing the image file 3 needs to be done only once. That is to say, the transfer processing time when the image file 3 is transferred to the mobile-phone unit 4 is reduced.

According to the digital camera 1 of this embodiment, in the parameter table 13, because the transfer compression parameters 12 are used in the quantization table 11, compression for transfer can be done using the quantization table 11 which is pre-stored in the image processing apparatus 6, and this is extremely advantageous for practical use.

In addition, in the digital camera 1 of this embodiment, compression for transfer can be done by changing the number of pixels of the image file 3 when transferring it to the mobile-phone unit 4, and thus the compression process is easy and simple, and reduction in image quality is the minimum necessary.

In the digital camera 1 of this embodiment, because the transfer compression parameter 12 is determined based on resolution of the image file 3, the compressed image file 5 is created using a suitable parameter which takes into account the resolution that is set by the resolution setting operation section 9. Also, because the transfer compression parameter 12 is determined based on the compression ratio of the image file 3, the compressed image file 5 is created using a suitable parameter which takes into account the compression ratio that is set by the compression ratio setting operation section 10.

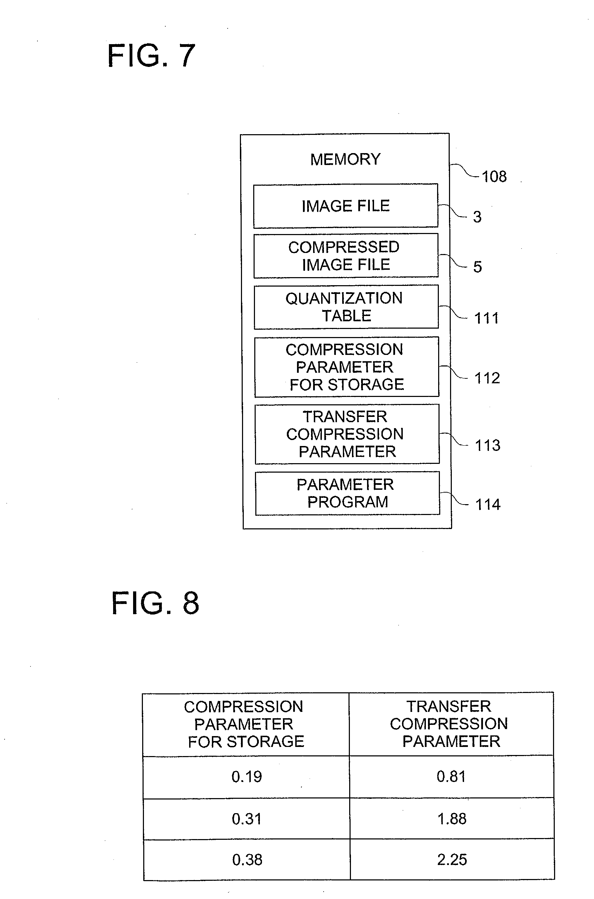

Fig. 7 and Fig. 8 show the second embodiment of the invention, and Fig. 7 is a block diagram showing the memory of the image processing apparatus of the digital camera, and Fig. 8 is an explanatory diagram showing compression parameters and transfer compression parameters for the image file. It is to be noted that the structural portions of this embodiment that are the same as those of the first embodiment are assigned the same numbers.

This digital camera 1 differs from that of the first embodiment in that the obtained image is compressed by fixed-length compression. That is to say, regardless of the image that is obtained, the data size if the image file 3 is fixed. As is the case for the first embodiment, in this digital camera 1, 3 levels of resolution and 2 levels of data size are selected and the obtained image is stored as image file 3 in the memory 108. It is to be noted that the digital camera 1 of this embodiment has the same schematic structure as Fig. 1 which shows the first embodiment.

In this embodiment, the 3 resolution levels have the same number of pixels as those of the first embodiment. In addition, the data size may be set in 2 modes which are fine mode and normal mode, and the data size is 1300 kB in the fine mode and 650 kB in the normal mode when the number of pixels is (2048 x 1536). The data size is 800 kB in the fine mode and 400 kB in the normal mode when the number of pixels is (1600 x 1200). The data size is 200 kB in the fine mode and 100 kB in the normal mode when the number of pixels is (640 x 480).

In this embodiment also, the image file 3 is expanded, resized to an image size for transfer and then compressed again to thereby create the compressed image file 5. The image sizes that are transferable to the mobile-phone unit 4 and the data sizes that correspond to these image sizes are the same as in the first embodiment.

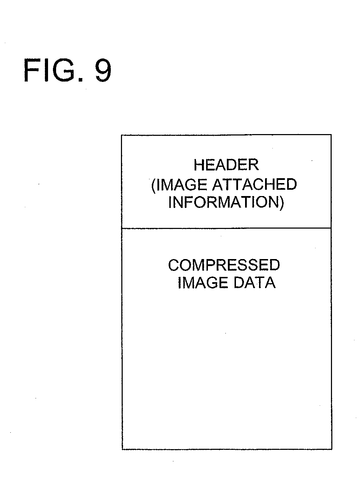

Fig. 9 shows an example of a structure of the image file 3 having image information and image-attached information recorded at the header portion. In the image file 3, the image information is recorded as a compressed image data, and as the image-attached information recorded are resolution value, shutter speed, aperture diaphragm, date of image pickup, quantization table 111, compression parameter 112, are compression mode (ex. fine, normal).

The image file 3 is created by JPEG compression as described above, and is created by using the storage transfer compression parameter 112 which is calculated based on image size and data size in the prescribed quantization table 111. In this embodiment, transfer compression parameter 113 is calculated by subjecting the storage compression parameter 112 to a prescribed processing so that the data size does not exceed the size transferable to the mobile-phone unit 4. In this embodiment, when the image file 3 which has been expanded is compressed for transfer, the compression is done by using transfer compression parameter 113 in the quantization table 111 to thereby create the compressed image file 5.

As shown in Fig. 7, the memory 108 of this digital camera 1 has stored therein, the parameter program 114 in which the transfer compression parameter 113 is uniquely set by the storage compression parameter 112 of the image file 3 and the number of pixels (resolution) for the each of the files 3 and 5. Fig. 8 shows examples of the storage compression parameter 112 and the transfer compression parameter 113 used for creating a compressed image file 5 in which the number of pixels is (640 x 480), from an image file 3 in which the number of pixels is (2048 x 1536).

As shown in Fig. 8, the transfer compression parameter 113 is 0.81 for an image file 3 whose storage compression parameter 112 is 0.19. The transfer compression parameter 113 is 1.88 for an image file 3 whose storage compression parameter 112 is 0.31. In addition, the transfer compression parameter 113 is 2.25 for an image file 3 whose storage compression parameter 112 is 0.38. The results of creating compressed image files 5 using the table obtained by using the transfer compression parameters 113 in the quantization table 111 are data sizes of 92 kB, 89 kB, and 85 kB. That is to say, in all cases, the data size is less than 100 kB which is the upper limit of the data size for the mobile-phone unit 4. In addition, the compressed image file 5 is never compressed more than necessary, and thus a specified image quality can be ensured.

In this manner, in this embodiment, the image file 3 is compressed for transfer so as to correspond with the data size that the mobile-phone unit 4 is capable of accepting, and thus the data size of the compressed image file 5 which is transferred to the mobile-phone unit 4 can be set to be close to the transferable data size. That is to say, an image can be sent to the mobile-phone unit 4 such that deterioration in quality due to compression for transfer which is done at the time of transfer is significantly controlled.

In addition, by causing the image file 3 to correspond with the data size that the mobile-phone unit 4 is capable of accepting, the operation of compressing the image file 3 needs to be done only once. That is to say, the transfer processing time when the image file 3 is transferred to the mobile-phone unit 4 is reduced.

Also, in this embodiment, because the transfer compression parameter 113 is determined based on storage compression parameter 112, the compressed image file 5 is created using a suitable parameter which takes into account the compression state of the image file 3.

In the first and second embodiments, the digital camera 1 is used as the image capturing device, but the image capturing device may be an information terminal such as PDA that has a communication function and portable an image pickup section.

Also, in each of the above-described embodiments, the format for the image file 3 and the compressed image file 5 is the JPEG format, but this invention may be applied to the TIFF format as well.

Also, in the above-described embodiments, the compressed image file 5 is transferred to the mobile-phone unit 4, but the external device to which the compressed file image 5 is transferred, is not limited to the mobile-phone unit 4, and the specific constructional details thereof may of course be suitably modified.

As described in detail above, in the configuration of (1), because the image file is compressed for transfer so as to correspond with the data size that the external device is capable of accepting, the data size of the compressed image file to be transferred to the external device can be close to the transferable data size. That is to say, the image can be transferred to the external device with the deterioration in image quality due to transfer compression at the time of transfer being controlled to the greatest extent possible.

In addition, because the image file corresponds with the data size that the external device is capable of accepting, compression of the image file is done only once. That is to say, when the image file is transferred to the external device, the transfer process can be carried out in a short time.

In the configuration of (2), in addition to the effects of (1), because the transfer compression parameter is determined based on the storage compression parameter, the compressed image file can be created using a suitable parameter that takes into account the compression state of the image file.

In the configuration of (3), in addition to the effects of Claim 2, because transfer compression parameter is used in the pre-set quantization table, compression for transfer can be carried out using a quantization table that is suitable for the compression, and this is extremely advantageous for practical use.

In the configuration of (4), in addition to the effects of any one of (1) to (3), because the transfer compression parameter at the time of compression for transfer is determined based on the data size of the image file, the compressed image file is created using a suitable parameter which takes into account data size.

In the configuration of (5), in addition to the effects of any one of Claims 1-4, because the compression for transfer can be done by changing the number of pixels of the image data, the compression process is simple and easy, and reduction of image quality is the minimum necessary.

In the configuration of (6), because the transfer compression parameter at the time of compression for transfer is determined based on the resolution of the image file, the compressed image file is created using a suitable parameter which takes into account the resolution that is set by the resolution setting section.

In the configuration of (7), because the transfer compression parameter is determined based on the compression ratio of the image file, the compressed image file is created using a suitable parameter which takes into account the compression ratio that is set by the compression ratio setting section.

## Claims

1. An image processing apparatus for storing a picked up image as an image file and transferring the image file to an external device, the image processing apparatus comprising:
a parameter determining section for determining a transfer compression parameter based on a data size of the image file and a data size that the external device is capable of accepting, by utilizing a prescribed parameter table; and
a transfer compression section for conducting a compression processing of the image file based on the transfer compression parameter determined by the parameter determining section and creating a compressed image file for transfer.

2. An image processing apparatus for storing a picked up image as an image file and transferring the image file to an external device, the image processing apparatus comprising:
a storage compression section for compressing the image file based on a storage compression parameter;
a parameter determining section for determining a transfer compression parameter based on the storage compression parameter and a data size that the external device is capable of accepting; and;
a transfer compression section for conducting a compression processing of the image file based on the transfer compression parameter determined by the parameter determining section and creating a compressed image file for transfer.

3. The image processing apparatus of claim 1 or 2, wherein the transfer compression section conducts the compression processing of the image file based on a table obtained by multiplying a prescribed quantization table by the transfer compression parameter.

4. An image capturing apparatus comprising:
an image processing apparatus described in claim 1, 2 or 3; and
a resolution setting section for setting a resolution of the image file;
wherein, the parameter determining section of the image processing apparatus determines the transfer compression parameter based on the resolution of the image file.

5. An image capturing apparatus comprising:
an image processing apparatus described in claim 1, 2 or 3; and
a compression ratio setting section for setting the compression ratio of the image file, wherein
the parameter determining section of the image processing apparatus determines the transfer compression parameter based on the compression ratio of the image file.
